# EUROPÄISCHE PATENTANMELDUNG

(11) **EP 1 170 082 A1**
(43) Veröffentlichungstag der Anmeldung: **09.01.2002**
(21) Anmeldenummer: 01890196.7
(22) Anmeldetag: 25.06.2001
(51) Int. Cl.: B23D 65/00, B23D 61/12, B23D 61/02, B24B 1/00

(54) **Verfahren zur Herstellung von Vormaterial und Vormaterial für Sägeblätter oder Sägebänder**

(30) Priorität: 05.07.2000 AT 11552000
(71) Anmelder: Böhler Ybbstal Band GmbH & Co KG, 3333 Böhlerwerk (AT)
(72) Erfinder: Hönickl, Gerhard, 3335 Weyer (AT)
(74) Vertreter: Wildhack, Helmut, Dr. Dipl.-Ing.

(57) **Zusammenfassung**

Die Erfindung betrifft ein Verfahren zur Herstellung von Vormaterial (1) für Sägeblätter oder Sägebänder, wobei ein Trägerteil (2) und ein Schneidteil (3) aus unterschiedlichen Werkstoffen miteinander durch Schweißen metallisch verbunden werden, wonach die Dicke des Bi- oder Trimetallverbundes justiert oder eingestellt und ein Vormaterial (1) gebildet wird.
Zur Vermeidung von Längsriefen (43,43',44,44') und Materialspannungen im Verbindungsbereich am Vormaterialband, welche durch Walzen zur Einstellung gleicher Banddicke entstehen können, ist erfindungsgemäß vorgesehen, daß nach dem Verschweißen der Teile (2,3) zumindest eine Oberflächenseite des Verbundteiles zumindest örtlich im Verbindungsbereich spanabhebend bearbeitet und Überhöhungen (41,42) der Schweißnaht (4) bzw. der Schweißraupe abgetragen werden.

## Beschreibung

Die Erfindung bezieht sich auf ein Verfahren zur Herstellung von Vormaterial für Sägeblätter oder Sägebänder, wobei ein Trägerteil und ein Schneidenteil aus unterschiedlichen Werkstoffen miteinander durch Schweißen metallisch verbunden werden und wonach die Dicke des Verbund-oder Bi-Metallteiles justiert oder eingestellt und das Vormaterial gebildet wird.

Weiters umfaßt die Erfindung ein Vormaterial für die Herstellung von Sägeblättern oder Sägebändern bestehend aus einem Trägerteil und mindestens einem Schneidteil, welche Teile miteinander unter Bildung eines Bi- oder
Tri-Metallverbundteiles durch Schweißen metallisch verbunden sind und das Vormaterial in dessen Dicke justiert ist.

Sägeblätter oder Sägebänder müssen auf Grund der unterschiedlichen Beanspruchungen im praktischen Einsatz einerseits hohe Biege,- Zug -und Schubspannungen im Blatt- oder Trägerteil aufnehmen können und andererseits eine hohe Formbeständigkeit der Schneidkanten bzw. eine hohe Abriebfestigkeit bzw. Verschleißfestigkeit der Zahnspitzen aufweisen.

Es ist bekannt, Sägeblätter oder Sägebänder aus einem Vormaterial zu fertigen, welches aus unterschiedlichen Werkstoffteilen besteht und zwar einem Trägerteil bzw. Trägerband aus einem zähfesten Werkstoff und einem Schneidenteil aus einem Werkstoff, der durch thermisches Vergüten eine hohe Härte und hohe Verschleißfestigkeit erreichen kann. Zur Erstellung eines derartigen sogenannten Bi - oder Tri-Metallbandes werden ein Trägerband und mindestens ein Schneidwerkstoffband zusatzwerkstoffrei, zumeist durch Laser- oder Elektronenstrahlschweißen, miteinander verbunden.

Die Schweißverbindung der Werkstoffteile kann jedoch fertigungstechnisch und metallurgisch eine Problemzone darstellen. Einerseits soll eine vollkommene Verschweißung der Schmalseiten der Bänder erreicht werden, andererseits sind unerwünschte Überhöhungen der Schweißnaht bzw. eine Bildung einer störenden erhabenen Schweißraupe zu vermeiden. Die Schweißnaht bzw. der Mischungsbereich, der bei der Schweißung gebildet wird, weist weiters geringe Zähigkeit und hohen Formänderungswiderstand des Materials auf

Zur weitgehenden Vermeidung der Schweißnahtüberhöhungen erfolgte schon eine dahin ausgerichtete Optimierung der Schweißtechnologie, allerdings kann es bei vollkommener Verschweißung der Schmalseiten der Bänder zumindest einseitig zur Bildung einer konvex vorstehenden Schweißraupe kommen.

Es ist nun, dem Stand der Technik gemäß üblich, nach einem Verschweißen des Trägerteiles mit dem Schneidenteil das Verbundband zu walzen bzw. dickenmäßig zu justieren, was vom Fachmann auch als Dressieren bezeichnet wird, und dadurch ein Vormaterial für eine Sägenfertigung herzustellen, welches keine konvexen oder vorstehenden Bereiche an den Seitenflächen, im weiteren als Bandoberflächen bezeichnet, besitzt. Diese durchaus einer verstärkten Reibung zwischen Sägeblatt und Schneidgut entgegenwirkende Maßnahme hat allerdings den Nachteil, daß die vorstehenden Bereiche der Schweißraupen an den Bandoberflächen mit erhöhter Verformung in den vorgesehenen Vormaterial-Bandquerschnitt gedrückt sind. Dadurch können Einziehungen des Material beiderseits der eingewalzten Volumsbereiche im Band verursacht sein und Längsriefen beiderseits der verformten Schweißraupen im Band vorliegen.

Diese Längsriefen im Verbindungsbereich der beiden Werkstoffteile haben jedoch den Nachteil, daß nach dem Ausarbeiten der Zahnlücken die Riefen im Zahnbereich eine erhöhte Spannung im Kerbgrund bewirken können, wodurch die Gefahr einer Rißinitiation gegeben ist, welche im praktischen Betrieb der Säge Zahnspitzenausbrüche verursachen oder eine Verkürzung der Lebensdauer der Säge bewirken kann.

Im Hinblick auf eine Verbesserung der Vormaterialgüte und letztlich einer erreichbaren hohen Sägenqualität wegen liegt der Erfindung die Aufgabe zugrunde, Längsriefen im Verbindungsbereich der beiden Werkstoffteile des bzw. am Vormaterial(s) zu vermeiden und eine Gefahr der Rißinitiation durch Kerben in Längsrichtung des Bandes im Verbindungsbereich der Werkstoffteile hintanzuhalten.

Diese Aufgabe wird bei einem Verfahren der eingangs genannten Art dadurch gelöst, daß nach dem Verschweißen der Teile zumindest eine Oberflächenseite des Verbundteiles zumindest örtlich im Verbindungsbereich spanabhebend bearbeitet und die Überhöhung der Schweißnaht bzw. der Schweißraupe abgetragen werden.

Die mit der Erfindung erzielten Vorteile sind im wesentlichen darin zu sehen, daß trotz einer Erstellung von Planparallelität des Bandes ein Aufbau von mechanischen Spannungen im Verbindungsbereich desselben minimiert, insbesondere vermieden werden kann. Im Schweißbereich zwischen Trägerwerkstoff und Schneidteil sind somit keine durch ein Einwalzen von Überhöhungen verursachten vergrößerten örtlichen Materialspannungen gegeben, wodurch eine aus dem Vormaterial geschaffene Säge verbesserte Gebrauchseigenschaften bei längerer Einsatzdauer aufweist.

Besondere Vorteile hinsichtlich der Güte der Verbindung der Teile und hinsichtlich der Qualität der letztlich aus dem Vormaterial gefertigten Säge werden erreicht, wenn die Schweißnahtüberhöhung durch Schleifen, insbesondere durch Feinschleifen, abgetragen wird.

Dabei kann jedoch wichtig und günstig sein, wenn die spanabhebende Bearbeitung oder das Schleifen des Verbundteiles mit einer Abtragsrichtung des Materials erfolgt, welche senkrecht oder schräg zur Längserstreckung des Verbundteiles verläuft, wobei das Werkzeug und der Verbundteil in dessen Längsrichtung relativ zueinander bewegt werden.

Die Güte der Bandoberflächen des Vormaterials für eine daraus gefertigte Säge kann verbessert und die Reibung zwischen Sägeblatt und Schneidgut kann in günstiger Weise vermindert werden, wenn nach der spanabhebenden Bearbeitung des Verbundteiles ein Nachwalzen desselben zum Justieren oder Einstellen der Dicke des Vormaterials für Sägen erfolgt.

Das weitere Ziel der Erfindung wird bei einem gattungsgemäßen Vormaterial für die Herstellung von Sägeblättern oder Sägebändern dadurch erreicht, daß zumindest im Verbindungsbereich von Trägerteil und Schneidteil die Oberflächen des Vormaterialbandes frei von Längsrillen ausgebildet sind. Die dadurch erreichten Vorteile sind im wesentlichen darin zu sehen, daß beim thermischen Vergüten des Sägeblattes keine Temperaturspitzen im oberflächennahen Material, die auf Riefen zurückzuführen sind, auftreten können. Weiters sind keinerlei Rißinitiationsstellen gegeben, so daß eine Ausbruchsgefahr von Zahnspitzen im Gebrauch der Säge gering ist.

Eine von Kerben ausgehende Rißinitiation und ein dadurch ausgelöstes Abbrechen der Schneidteilspitzen kann weitgehend unterbunden werden, wenn zumindest eine Oberflächenseite des Vormaterials zumindest im Verbindungsbereich der Teile eine Schleifstruktur oder Schleifriefen aufweisen, welche senkrecht oder schräg zur Längserstreckung des Vormaterials gerichtet sind.

Wenn weiters, wie in günstiger Weise vorgesehen sein kann, das Vormaterial letztlich eine Oberflächenjustierung bzw. Dickeneinstellung durch Nachwalzen aufweist, sind besonders hohe Anforderungen an die Vormaterialgüte erreichbar.

Anhand von Bildern wird im folgenden die Erfindung näher erläutert. Es zeigen

Fig. 1 bis Fig. 3 schematisch im Schnitt Skizzen betreffend die Herstellung eines Vormaterials für Sägebänder gemäß dem Stand der Technik und zwar
Fig. 1 Verbundteil
Fig. 2 Walzen oder Justieren des Verbundmaterials
Fig. 3 Vormaterial

Fig. 4 bis Fig. 7 vom Schweißverbund jeweils Ätzbilder von metallographischen Schliffen mit einer Vergrößerung von 110: 1 und zwar

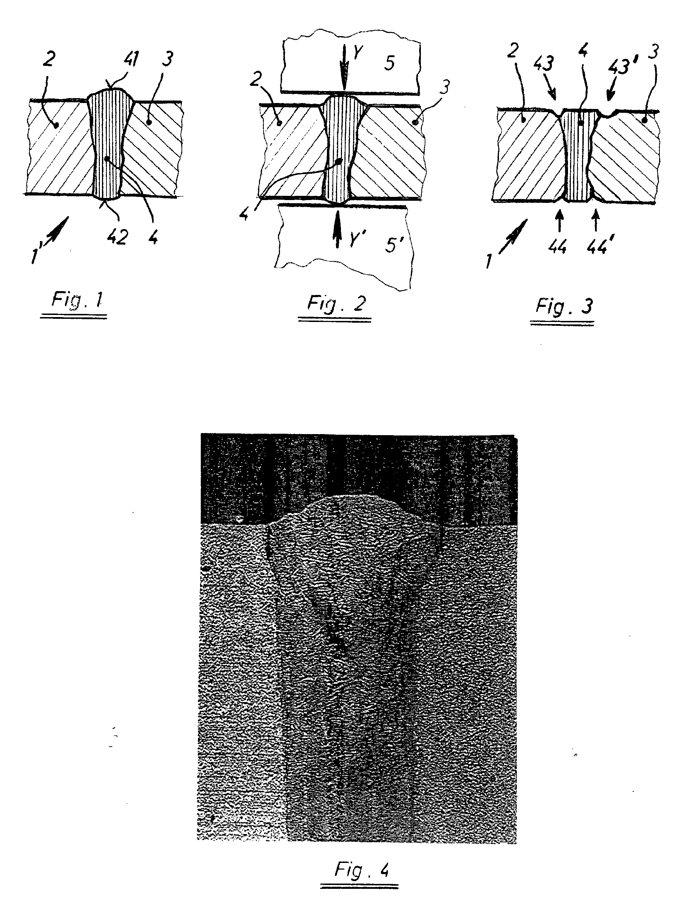

Fig. 4 Schweißraupe

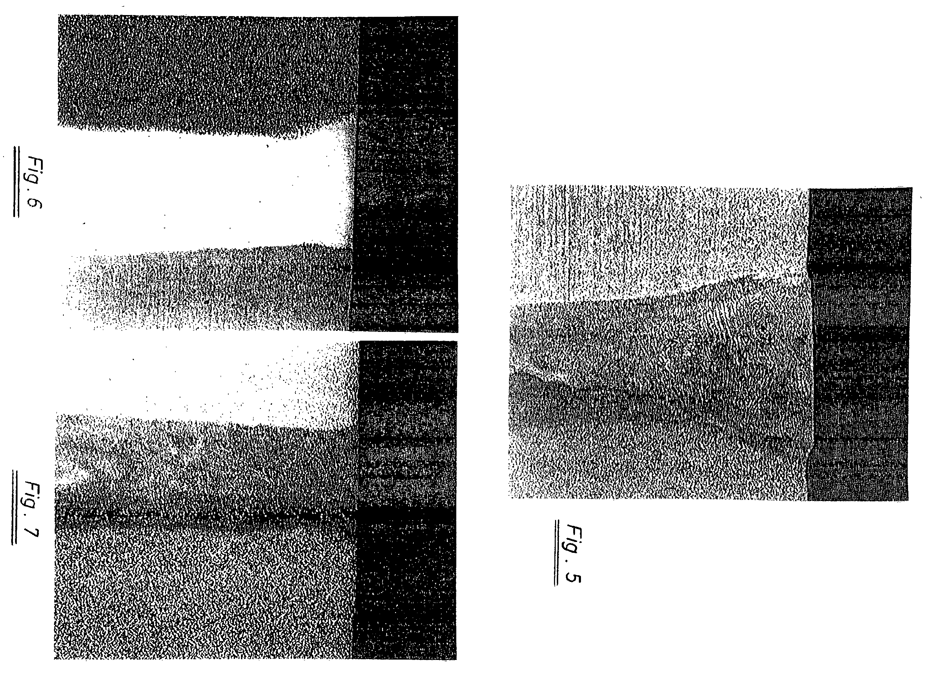

Fig. 5 Schweißraupe teilweise eingewalzt
Fig. 6 und Fig. 7 Vormaterial mit spanabhebend entfernter Schweißraupe

In Fig. 1 ist ein Verbund- oder Bi-Metall-Teil 1' schematisch dargestellt. Dieser Verbundteil 1' besteht aus einem Trägerband 2, welches mittels einer Schweißverbindung 4 mit einem Schneidenband 3 metallisch verbunden ist. Die Verbindungsschweißung 4 weist an den Bandoberflächen Überhöhungen 41, 42 der Schweißnaht auf, die beim Schweißen gebildet wurden.

Fig. 2 zeigt eine wie in Fig. 1 prinzipiell dargestellte Schweißverbindung 4, welche durch eine Kraftwirkung y,y' von Walzen 5,5' verformt wird. Durch ein derartiges Verformen der Schweißnaht, welches vom Fachmann als Dressieren des Verbundteiles bezeichnet wird, erfolgt eine Einstellung einer gleichen Dicke von Trägerband 2, Schneidenband 3 und Verbindungsschweißung 4, wie dies für ein Vormaterial für die Herstellung von Sägen erforderlich ist.

In Fig. 3 ist ein Vormaterial 1 nach einem Egalisieren durch Walzen dargestellt. Eine Schweißnaht 4 weist eine gleiche Dicke wie ein Trägerband 2 und ein Schneidenteil 3 auf. Durch eine Verformung bzw. ein Einwalzen von in Fig. 1 und Fig. 2 dargestellten Überhöhungen 41, 42 zur Erlangung einer gleichen Banddicke entstehen im Verbindungsbereich Längsrillen 43,43',44.44' und Materialspannungen. Längsrillen 43,43', 44 44' bilden sich vorwiegend auf Grund von Scherspannungen im Werkstoff neben der Schweißverbindung aus. Weiters führt ein Einwalzen von Überhöhungen 41, 42 zu einer Masseverdrängung und einer Ausbildung von inneren Spannungen im Werkstoff. Beides kann bei einer Herstellung von Sägen aus einem derartigen Vormaterial zu einer Schwächung der Verbindung zwischen Trägerteil 2 und Schneidenteil 3 führen.

Fig. 4 zeigt einen metallographischen Schliff einer Schweißverbindung senkrecht zur Längserstreckung eines Verbundteiles mit einer Vergrößerung von 110:1. Deutlich ist eine Erhöhung der Schweißraupe über die Oberflächen von Träger- und Schneidenband zu erkennen.

Aus Fig.5 ist eine eingewalzte Überhöhung im Schliffbild zu erkennen, wobei beiderseits derselben Längsrillen gebildet sind.

In Fig. 6 und Fig. 7 sind Schweißverbindungen eines Vormateriales wiedergegeben, welches nach dem erfindungsgemäßen Verfahrens hergestellt wurde. Unterschiede im Aussehen der Werkstoffe im Schliffbild sind durch verschiedene Anätzungen bzw. Ätzmittel begründet. Deutlich ist eine Längsriefenfreiheit des Vormateriales zu erkennen.

Untersuchungen haben ergeben, daß aus erfindungsgemäß hergestelltem Vormaterial gefertigte Sägeblätter und Sägebänder eine wesentlich geringere Ausfallshäufigkeit wegen Zahnbruches aufweisen. Weiters hat sich gezeigt, daß verbesserte Schweißverbindungsverfahren, die allerdings größere Überhöhungen bzw. Schweißraupen bewirken können, anwendbar sind, weil die Überhöhungen letztlich spanabhebend abgetragen werden.

## Patentansprüche

1. Verfahren zur Herstellung von Vormaterial für Sägeblätter oder Sägebänder, wobei ein Trägerteil und ein Schneidenteil aus unterschiedlichen Werkstoffen miteinander durch Schweißen metallisch verbunden werden, wonach die Dicke des Verbund- oder Bi-Metallteiles justiert oder eingestellt und das Vormaterial gebildet wird, **dadurch gekennzeichnet, daß** nach dem Verschweißen der Teile zumindest eine Oberflächensseite des Verbundteiles zumindest örtlich im Verbindungsbereich spanabhebend bearbeitet und die Überhöhung der Schweißnaht bzw. der Schweißraupe abgetragen wird.

2. Verfahren nach Anspruch 1, **dadurch gekennzeichnet, daß** die Schweißnahtüberhöhung(en) durch Schleifen, insbesondere durch Feinschleifen, abgetragen wird(werden).

3. Verfahren nach Anspruch 1 oder 2, **dadurch gekennzeichnet, daß** die spanabhebende Bearbeitung oder das Schleifen des Verbundteiles mit einer Abtragsrichtung des Materials erfolgt, welche senkrecht oder schräg zur Längserstreckung des Verbundteiles verläuft, wobei das Werkzeug und der Verbundteil in dessen Längsrichtung relativ zueinander bewegt werden.

4. Verfahren nach Anspruch 1 bis 3, **dadurch gekennzeichnet, daß** nach der spanabhebenden Bearbeitung des Verbundteiles ein Nachwalzen desselben zum Justieren oder Einstellen der Dicke des Vormaterials für Sägen erfolgt.

5. Vormaterial für die Herstellung von Sägeblättern oder Sägebändern bestehend aus einem Trägerteil und mindestens einem Schneidteil, welche Teile miteinander unter Bildung eines Bi-oder Tri-Metallverbundteiles durch Schweißen metallisch verbunden sind und das Vormaterial in dessen Dicke justiert ist, **dadurch gekennzeichnet, daß** zumindest im Verbindungsbereich von Trägerteil und Schneidteil die Oberflächen des Vormaterialbandes frei von Längsriefen ausgebildet sind.

6. Vormaterial nach Anspruch 5, **dadurch gekennzeichnet, daß** zumindest eine Oberflächenseite des Vormaterials zumindest im Verbindungsbereich der Teile eine Schleifstruktur oder Schleifriefen aufweisen, welche senkrecht oder schräg zur Längserstreckung des Vormaterials gerichtet sind.
